Europäisches Patentamt

European Patent Office

Office européen des brevets

(19)

(11) EP 1 167 449 A1

(12) EUROPEAN PATENT APPLICATION

(43) Date of publication:
02.01.2002 Bulletin 2002/01

(51) Int Cl.⁷: **C08L 69/00**, C08K 3/00, C08K 7/02

(21) Application number: 01114745.1

(22) Date of filing: 22.06.2001

(84) Designated Contracting States:
**AT BE CH CY DE DK ES FI FR GB GR IE IT LI LU MC NL PT SE TR**
Designated Extension States:
**AL LT LV MK RO SI**

(30) Priority: 28.06.2000 JP 2000194065
28.06.2000 JP 2000194066

(71) Applicant: **IDEMITSU PETROCHEMICAL CO., LTD.**
**Tokyo 130-0015 (JP)**

(72) Inventors:
• **Okamoto, Masaya**
**Ichihara-shi, Chiba-ken (JP)**
• **Kitayama, Masahiro**
**Ichihara-shi, Chiba-ken (JP)**
• **Nodera, Akio**
**Ichihara-shi, Chiba-ken (JP)**

(74) Representative:
**Gille Hrabal Struck Neidlein Prop Roos**
**Patentanwälte Brucknerstrasse 20**
**40593 Düsseldorf (DE)**

(54) **Polycarbonate resin composition and shaped article**

(57)    The polycarbonate resin composition of the present invention comprises (A) 100 parts by mass of an end-modified polycarbonate resin terminated with a ($C_{10}$-$C_{35}$ alkyl)phenoxy group or a polycarbonate resin mixture comprising the end-modified polycarbonate resin and another polycarbonate resin; (B) 0.1 to 10 parts by mass of a functionalized silicone compound; and (C) 0.2 to 10 parts by mass of a core-shell type rubber-like graft elastomer. Another polycarbonate resin composition of the present invention comprises a resin mixture comprising 100 parts by mass of a resin mixture comprising (A') 1 to 99% by mass of an end-modified polycarbonate resin terminated with a ($C_{10}$-$C_{35}$ alkyl)phenoxy group or a polycarbonate mixture comprising the end-modified polycarbonate resin and another polycarbonate resin and (B') 99 to 1% by mass of a styrene resin; and (C') 0.01 to 5 parts by mass of a polyfluoroolefin resin. By the combined use of the polycarbonate having a specific terminal structure with the functionalized silicone compound and the core-shell type rubber-like graft elastomer, or with the styrene resin and the polyfluoroolefin resin, the moldability/extrudability, i.e., melt fluidity, of the polycarbonate composition is improved while retaining the good impact resistance inherent to polycarbonate resin, thereby enabling the production of thin-wall shaped articles. The polycarbonate resin composition of the present invention is also improved in the flame retardancy without using a halogen- or phosphorus-containing flame retardant, and is therefore excellent in the heat resistance and the recyclability.

FIG. 1

Test Piece

b

a

X

EP 1 167 449 A1

**Description**

BACKGROUND OF THE INVENTION

1. Field of the Invention

The present invention relates to a polycarbonate resin composition, and more particularly to a polycarbonate resin composition which is improved in the moldability, i.e., the melt fluidity without reducing its inherent impact resistance and provided with a good flame retardancy without using a halogen- or phosphorus-containing flame retardant.

2. Description of the Prior Art

Polycarbonate resins have been extensively used in various applications including electric and electronic devices such as office automation (OA) devices, information and telecommunication devices and domestic electric appliances, automobiles, and building materials because of their excellent impact resistance, heat resistance and electric properties. The polycarbonate resins are usually self-extinguishing, but have been required to show a much higher flame retardancy especially when applied to OA devices, information and telecommunication devices and electric and electronic devices. To meet the requirement, it has been attempted to improve the flame retardancy by adding various flame retardants to the polycarbonate resins.

Conventionally, the flame retardancy of the polycarbonate resins has been improved by halogen-containing flame retardants such as halogenated bisphenol A and halogenated polycarbonate oligomers, in view of their good flame retardant efficiency, with the aid of flame retardant assistants such as antimony oxide. Recent market's demand has been directed to use of a halogen-free flame retardant to ensure safety and avoid adverse influence on environments upon disposal and incineration. As the halogen-free flame retardants, various organophosphorus flame retardants, especially organophosphoric esters, have been proposed because of their high ability of providing an excellent flame retardancy to polycarbonate resins and their action as a plasticizer.

To render the polycarbonate resins flame retardant, a relatively large amount of the phosphoric ester is required. Also, owing to a high molding, extruding or forming temperature and a high melt viscosity of the polycarbonate resins, the molding, extruding or forming process must be performed at a higher temperature for producing thinner-wall or larger-size shaped articles. The phosphoric ester contributes to improvement in the flame retardancy, but not necessarily sufficient in providing good working conditions and producing shaped articles with good appearance because it is corrosive to mold and generates harmful gases. Further, the use of the phosphoric ester causes reduction of the impact resistance and the color change in the shaped articles when kept under heating or under high-temperature and high-humidity conditions. Furthermore, the polycarbonate resin containing such a phosphoric ester has a poor recyclability due to insufficient heat stability of the phosphoric ester, thereby failing to meet recent requirement for saving of resources.

It is known to render the polycarbonate resin flame retardant by incorporating a silicone compound, thereby preventing the generation of harmful gases upon combustion. For example, Japanese Patent Application Laid-Open No. 10-139964 discloses a flame retardant silicone resin having a specific chemical structure and molecular weight. Although this flame retardant produces a certain success in making the polycarbonate resin flame retardant, the resultant shaped articles tend to be insufficient in impact resistance.

United States Patent Nos. 3,971,756, 4,387,176 and 5,100,958, and Japanese Patent Application Laid-Open Nos. 6-306265, 8-12868 and 8-295796, etc. also disclose flame retardant polycarbonate resins containing silicones. In the proposed flame retardant polycarbonate resins, the silicones are used as improvers for the dripping resistance rather than flame retardants. In fact, to impart a flame retardancy, it is essentially required to use a flame retardant such as a phosphoric ester and a salt of metal in group II of the periodic table in combination with the silicones. Namely, the silicones are different, in function and effect, from the silicone compound described in Japanese Patent Application Laid-Open No. 10-139964. Further, the used of the silicones in combination with the flame retardant causes reduction in the moldability, extrudability, and physical properties of the polycarbonate resin.

Japanese Patent Application Laid-Open No. 8-81620 discloses a flame retardant polycarbonate resin composition comprising a polycarbonate resin, a polycarbonate-polyorganosiloxane copolymer and a fibrillatable polytetrafluoroethylene. This composition shows an excellent flame retardancy when the polyorganosiloxane is contained in a limited small amount. Despite the excellent flame retardancy, the composition tends to be insufficient in impact resistance inherent to polycarbonate resins and insufficient in moldability and extrudability.

SUMMARY OF THE INVENTION

In view of the problems in the prior art, an object of the present invention is to improve the moldability and extrudability, i.e., the melt fluidity of a polycarbonate resin composition without reducing its inherent impact resistance, thereby providing a polycarbonate resin composition capable of forming a light, thin-wall shaped article.

Another object of the present invention is to provide a polycarbonate resin composition having an improved flame retardancy without deteriorating its inherent impact resistance and without using a halogen- or phosphorus-containing flame retardant.

A further object of the present invention is to provide a polycarbonate resin composition having an excellent flame retardancy, heat resistance and recyclability, and being capable of forming a light, thin-wall shaped article.

A still further object of the present invention is to provide a shaped article of the polycarbonate resin composition.

As a result of extensive researches for enhancing a flame retardancy of polycarbonate resins and improving impact resistance, heat resistance, recyclability, moldability, and extrudability thereof, the inventors have found that a polycarbonate resin composition containing a small amount of a specific silicone compound, a specific rubber-like elastomer and a specific end-modified polycarbonate resin is considerably improved in the moldability, extrudability and flame retardancy without reducing the impact resistance. The inventors have further found that a polycarbonate resin composition containing the specific end-modified polycarbonate resin, a styrene resin and a specific fluororesin shows a considerably improved moldability and moldability with the impact resistance retained at high level, and that the flame retardancy is further improved, without using a halogen- or phosphorus-containing flame retardant, by the combined use of the specific silicone compound. The present invention has been accomplished based on these findings.

Thus, in a first aspect of the present invention, there is provided a polycarbonate resin composition comprising (A) 100 parts by mass of an end-modified polycarbonate resin terminated with a ($C_{10}$-$C_{35}$ alkyl)phenoxy group or a polycarbonate resin mixture comprising the end-modified polycarbonate resin and another polycarbonate resin; (B) 0.1 to 10 parts by mass of a functionalized silicone compound; and (C) 0.2 to 10 parts by mass of a core-shell type rubber-like graft elastomer.

The component A preferably contains a polycarbonate-polyorganosiloxane copolymer. In addition, the polycarbonate resin composition preferably contains a polyfluoroolefin resin as a component D.

In a second aspect of the present invention, there is provided a polycarbonate resin composition comprising 100 parts by mass of a resin mixture comprising (A') 1 to 99% by mass of an end-modified polycarbonate resin terminated with a ($C_{10}$-$C_{35}$ alkyl)phenoxy group or a polycarbonate mixture comprising the end-modified polycarbonate resin and another polycarbonate resin and (B') 99 to 1% by mass of a styrene resin; and (C') 0.01 to 5 parts by mass of a polyfluoroolefin resin.

The component A' preferably contains a polycarbonate-polyorganosiloxane copolymer, and the component B' is preferably a rubber-modified styrene resin. In addition, the polycarbonate resin composition preferably further contains a functionalized silicone compound as a component D' and/or an inorganic filler as a component E'.

In a third aspect of the present invention, there is provided a shaped article of the above polycarbonate resin composition.

BRIEF DESCRIPTION OF THE DRAWING

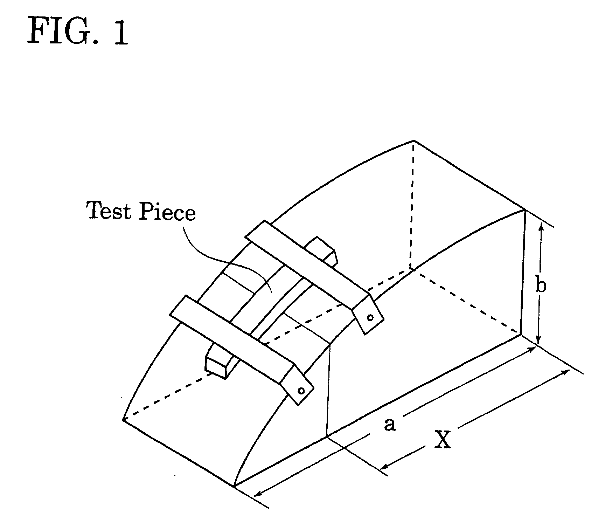

Fig. 1 is a perspective view of a jig mounting a test piece used for evaluating a grease resistance of the composition of the present invention.

DETAILED DESCRIPTION OF THE INVENTION

The present invention will be described in detail below.

1. First Polycarbonate Resin Composition

The first polycarbonate resin composition comprises (A) 100 parts by mass of an end-modified polycarbonate resin terminated with a ($C_{10}$-$C_{35}$ alkyl)phenoxy group or a polycarbonate resin mixture comprising the end-modified polycarbonate resin and another polycarbonate resin; (B) 0.1 to 10 parts by mass of a functionalized silicone compound; and (C) 0.2 to 10 parts by mass of a core-shell type rubber-like graft elastomer.

COMPONENT A: Polycarbonate Resin

The component A of the first polycarbonate resin composition comprises the end-modified polycarbonate resin terminated with a ($C_{10}$-$C_{35}$ alkyl)phenoxy group, preferably a ($C_{10}$-$C_{25}$ alkyl)phenoxy group (hereinafter occasionally referred to merely as "end-modified PC"), or a polycarbonate resin mixture of the end-modified PC and another

EP 1 167 449 A1

polycarbonate resin.

The end-modified PC is produced by using a ($C_{10}$-$C_{35}$ alkyl)phenol, i.e, an alkylphenol having a $C_{10}$-$C_{35}$ alkyl group as an end modifier in the production of polycarbonate resins. Examples of the ($C_{10}$-$C_{35}$ alkyl)phenol include, but not particularly limited to, decylphenol, undecylphenol, dodecylphenol, tridecylphenol, tetradecylphenol, pentadecylphenol, hexadecylphenol, heptadecylphenol, octadecylphenol, nonadecylphenol, eicosylphenol, docosylphenol and tetracosylphenol.

In the ($C_{10}$-$C_{35}$ alkyl)phenol, the $C_{10}$-$C_{35}$ alkyl group may be bonded to any of o-, m- and p-positions with respect to the hydroxyl group of the benzene ring with the p-position being preferred. The $C_{10}$-$C_{35}$ alkyl group may be linear or branched. Both linear and branched $C_{10}$-$C_{35}$ alkyl groups may be present on the phenol ring, however, at least one $C_{10}$-$C_{35}$ alkyl group would sufficient for the purpose of the invention. For example, if one $C_{10}$-$C_{35}$ alkyl group is bonded to the benzene ring, remaining four positions of the benzene ring may remain unsubstituted or may be substituted with $C_1$-$C_9$ alkyl, $C_6$-$C_{20}$ aryl or halogen.

The basic skeleton of the end-modified PC may be constituted by any of polycarbonate resins described below. For example, the end-modified PC is produced by using the ($C_{10}$-$C_{35}$ alkyl)phenol as an end modifier for regulating the molecular weight in the polymerization between a dihydric phenol and phosgene or a carbonate compound in methylene chloride solvent in the presence of triethylamine catalyst, or in the polymerization reaction of polycarbonate oligomers. The ($C_{10}$-$C_{35}$ alkyl)phenol terminates and modifies one or both ends of polycarbonate. The ratio of the molecular ends modified with the ($C_{10}$-$C_{35}$ alkyl)phenol in the end-modified PC is 20 mol% or higher, and preferably 50 mol% or higher based on the total molecular ends. The molecular ends not modified with the ($C_{10}$-$C_{35}$ alkyl)phenol may be hydroxyl or end groups derived from another end modifier.

Another end modifiers may include those ordinarily used in the production of polycarbonate resins, such as phenol, p-t-butylphenol, p-t-octylphenol and p-cumylphenol. The use of only these phenols fails to produce the composition which simultaneously satisfies excellent moldability, extrudability and impact resistance.

The component A may be constituted by the end-modified PC solely or a mixture of the end-modified PC and another polycarbonate resin. The content of the end-modified PC in the mixture is not particularly restricted. The moldability and extrudability (melt fluidity) of the composition varies depending upon the proportion of the molecular ends modified with ($C_{10}$-$C_{35}$ alkyl)phenol to the total molecular ends of the polycarbonate resins in the component A. Therefore, the content of the end-modified PC in the mixture is usually 20% by mass or higher, preferably 50% by mass or higher, more preferably 70% by mass or higher based on the weight of the mixture. The content of the end-modified PC in the mixture may be appropriately determined according to the proportion of the ($C_{10}$-$C_{35}$ alkyl)phenol, kinds of the other end groups of the end-modified PC, kinds of the end groups of another polycarbonate resin and the intended level of the melt fluidity.

Various polycarbonate resins may be used without any particular limitations as the polycarbonate resins other than the end-modified PC. As such polycarbonate resins, there may be usually used aromatic polycarbonates produced by the reaction of a dihydric phenol and a carbonate precursor, specifically, produced by solution polymerization or melt polymerization of the dihydric phenol and the carbonate precursor, i.e., the reaction between the dihydric phenol and phosgene or the transesterification of the dihydric phenol with diphenylcarbonate, etc.

Examples of the dihydric phenol are 2,2-bis(4-hydroxyphenyl)propane (bisphenol A), bis(4-hydroxyphenyl) methane, 1,1-bis(4-hydroxyphenyl)ethane, 2,2-bis(4-hydroxy-3,5-dimethylphenyl)propane, 4,4'-dihydroxydiphenyl, bis(4-hydroxyphenyl)cycloalkane, bis(4-hydroxyphenyl)oxide, bis(4-hydroxyphenyl)sulfide, bis(4-hydroxyphenyl)sulfone, bis(4-hydroxyphenyl)sulfoxide, bis(4-hydroxyphenyl)ether, and bis(4-hydroxyphenyl)ketone. In addition, resorcinol and catechol are usable. Of these dihydric phenols, preferred are bis(hydroxyphenyl)alkanes, and more preferred are those having a bisphenol A structure.

The carbonate precursors are carbonyl halides, carbonyl esters or haloformates. Specific examples of the carbonate precursors include phosgene, dihaloformates of dihydric phenol, diphenylcarbonate, dimethylcarbonate and diethylcarbonate.

These dihydric phenols and carbonate precursors may be respectively used alone or in combination of two or more.

The polycarbonate resins may have a branched structure. Examples of branching agents include 1,1,1-tris (4-hydroxyphenyl)ethane, $\alpha$, $\alpha'$, $\alpha''$-tris(4-hydroxyphenyl)-1,3,5-trisisopropylbenzene, phloroglucinol, trimellitic acid and isatin bis(o-cresol). Also, the molecular weight of the polycarbonate resin may be controlled by a molecular weight modifier such as phenol, p-t-butylphenol, p-t-octylphenol, p-cumylphenol and an alkylphenol having $C_{10}$-$C_{35}$ alkyl group.

As described above, the polycarbonate resin composition of the present invention is characterized in containing, at least, the end-modified PC terminated with the ($C_{10}$-$C_{35}$ alkyl)phenol as a molecular weight modifier.

Further, the polycarbonate forming the skeleton of the end-modified PC or the polycarbonate resin other than the end-modified PC may include a polyester-polycarbonate copolymer or various polyester-polycarbonate mixtures. The polyester-polycarbonate copolymer may be produced by the polymerization of polycarbonate in the presence of an ester precursor, for example, dicarboxylic acids such as terephthalic acid and polymethylene dicarboxylic acid and an ester-forming derivative thereof.

Also, a polycarbonate-polyorganosiloxane copolymer (hereinafter occasionally referred to merely as "PC-POS copolymer") may be used as the polycarbonate resin other than the end-modified PC. The PC-POS copolymer comprises a polycarbonate segment and a polyorganosiloxane segment, and may be produced by dissolving a polycarbonate oligomer and polyorganosiloxane having a reactive end group such as polydimethylsiloxane, polydiethylsiloxane and polymethylphenylsiloxane in a solvent such as methylene chloride, adding an aqueous sodium hydroxide solution containing bisphenol A to the resultant solution, and subjecting the mixture to interfacial polycondensation in the presence of a catalyst such as triethylamine (Japanese Patent Application Laid-Open Nos. 3-292359, 4-202465, 8-81620, 8-302178 and 10-7897).

The PC-POS copolymer preferably comprises a polycarbonate segment having a polymerization degree of about 3 to 100 and a polyorganosiloxane segment having a polymerization degree of about 2 to 500. Also, the PC-POS copolymer including by-produced bisphenol A polycarbonate contains the polyorganosiloxane in an amount of usually 0.2 to 30% by mass, preferably 0.3 to 20% by mass. In the present invention, the end-modified PC, the polycarbonate resin other than the end-modified PC and the PC-POS copolymer have a viscosity-average molecular weight of usually 10,000 to 100,000, preferably 11,000 to 40,000, more preferably 12,000 to 30,000. The viscosity-average molecular weight (Mv) was determined as follows. First, the viscosity of a methylene chloride solution of the respective resins was measured at 25°C using Ubbellohde viscometer to determine an intrinsic viscosity $[\eta]$ from the measured results. Then, the viscosity-average molecular weight (Mv) was calculated from the intrinsic viscosity $[\eta]$ according to the following formula:

$$[\eta] = 1.23 \times 10^{-5} Mv^{0.83}$$

The component A may be a mixture of the end-modified PC resin with the PC-POS copolymer, the bisphenol A polycarbonate, etc. The mixture may contain the PC-POS copolymer in an amount such that the content of polyorganosiloxane is 0.1 to 10% by mass, preferably 0.3 to 5% by mass based on the total weight of the component A.

COMPONENT B: Functionalized Silicone Compound

The functionalized silicone compound used as the component B of the first polycarbonate resin composition is a (poly)organosiloxane having a functional group. The (poly)organosiloxane is a polymer or copolymer having a basic structure represented by the following formula:

$$R^1{}_a R^2{}_b SiO_{(4-a-b)/2}$$

wherein $R^1$ is a functional group; $R^2$ is $C_1$-$C_{12}$ hydrocarbon group; and a and b are numbers satisfying the following expressions:

$$0 < a \leq 3,$$

$$0 \leq b < 3,$$

and

$$0 < a + b \leq 3.$$

Examples of the functional group include alkoxy, aryloxy, polyoxyalkylene, hydrogen, hydroxy, carboxyl, cyanol, amino, mercapto and epoxy.

The functionalized silicone compound may have a plurality of functional groups which may be the same or different from each other. Also, in the present invention, a mixture of two or more different silicone compounds having different functional groups may be used as the component B. In the functionalized silicone compounds, the molar ratio of the functional group $R^1$ to the hydrocarbon group $R^2$ is usually about 0.1 to 3, preferably about 0.3 to 2.

The functionalized silicone compound may be liquid or powder, and preferably shows a good dispersibility upon melt-kneading. The preferred functionalized silicone compounds include, for example, a liquid silicone compound showing a kinematic viscosity of about 10 to 500,000 mm$^2$/s at room temperature. In the polycarbonate resin composition of the present invention, even though the silicone compound is liquid, the silicone compound can be uniformly dispersed in the composition and less bleeds out during the molding or extrusion operation or to the surface of a shaped article.

The first polycarbonate resin composition contains the functionalized silicone compound in an amount of 0.1 to 10 parts by mass, preferably 0.2 to 5 parts by mass based on 100 parts by mass of the component A. When less than 0.1 part by mass, the composition is not sufficiently improved in flame retardancy. Excess use exceeding 10 parts by mass produces substantially no additional effect. When the PC-POS copolymer is used, the content of the functionalized silicone compound is appropriately determined in consideration of the total amount of silicones in the composition. Specifically, since the silicones from the PC-POS copolymer are already present in the composition, the content of the functionalized silicone compound can be reduced correspondingly. Thus, even when the content of the PC-POS copolymer is reduced, the flame retardancy of the composition can be maintained at high level.

If a non-functionalized dialkylsilicone compound is used as the component B instead of the functionalized silicone compound, no effect of improving the flame retardancy is attained as described in comparative examples below.

COMPONENT C: Core-Shell Type Rubber-Like Graft Elastomer

The core-shell type rubber-like graft elastomer as the component C is a powdery or granular rubber-like graft elastomer having a two-layer structure of a soft rubber-like core and a hard resinous shell. A large portion of the core-shell type rubber-like graft elastomer maintains its original powdery or granular shape even after melt-blended with the polycarbonate resin, and therefore, uniformly dispersed in the composition without causing surface-peeling.

Various core-shell type rubber-like graft elastomers may be used as the component C. Commercially available are Hiblen B621 available from Nippon Zeon Co., Ltd., KM-330 available from Rohm & Haas Company, and Metablen W529, Metablen S2001, Metablen C223 and Metablen B621 all available from Mitsubishi Rayon Co., Ltd.

Of the above, preferred are, for example, those produced by polymerizing at least one vinyl monomer in the presence of a rubber-like polymer obtained from a monomer mixture mainly composed of alkyl acrylate or alkyl methacrylate, and dimethylsiloxane. Example of suitable alkyl acrylates or alkyl methacrylates are those having $C_2$-$C_{10}$ alkyl. Specific examples include ethyl acrylate, butyl acrylate, 2-ethylhexyl acrylate and n-octyl methacrylate. The rubber-like elastomers obtained from the monomer component mainly composed of alkyl acrylate or the like may be produced by reacting 70% by mass or more of alkyl acrylate with 30% by mass or less of another vinyl monomer copolymerizable with the alkyl acrylate, such as methyl methacrylate, acrylonitrile, vinyl acetate and styrene. In the polymerization, a polyfunctional monomer such as divinylbenzene, ethylene dimethacrylate, triallyl cyanurate and triallyl isocyanurate may be added as a cross-linking agent.

Examples of the vinyl monomer to be polymerized in the presence of the rubber-like polymer include aromatic vinyl compounds such as styrene and $\alpha$-methylstyrene; acrylic esters such as methyl acrylate and ethyl acrylate; and methacrylic esters such as methyl methacrylate and ethyl methacrylate. These vinyl monomers may be used alone or in combination of two or more. Also, the vinyl monomer may be copolymerized with another vinyl monomer, e.g., a vinyl cyanide compound such as acrylonitrile and methacrylonitrile; or a vinyl ester compound such as vinyl acetate and vinyl propionate. The polymerization may be conducted by various methods such as bulk polymerization, suspension polymerization and emulsion polymerization with the emulsion polymerization being particularly preferred.

The thus obtained core-shell type rubber-like graft elastomer preferably contains the rubber-like polymer in an amount of 20% by mass or higher. Specific examples of such a core-shell type rubber-like graft elastomer include MAS resin elastomers such as graft copolymers produced by reacting 60 to 80% by mass of n-butyl acrylate with styrene or methyl methacrylate. Particularly preferred are composite rubber graft copolymers produced by grafting at least one vinyl monomer to a composite rubber having an average particle size of about 0.01 to 1 μm and comprising 5 to 95% by mass of a polysiloxane rubber component and 95 to 5% by mass of a poly(alkyl (meth)acrylate) rubber component which are unseparably entangled with each other. The composite rubber-like graft copolymer exhibits a high improving effect of the impact resistance as compared with the graft copolymer having only one of the polysiloxane rubber component and the poly(alkyl (meth)acrylate) rubber component. As the composite rubber graft copolymer, there may be exemplified Metablen S-2001 available from Mitsubishi Rayon Co., Ltd.

The content of the core-shell type rubber-like graft elastomer is 0.2 to 10 parts by mass, preferably 0.5 to 5 parts by mass based on 100 parts by mass of the component A. When the content is less than 0.2 part by mass, the composition is less improved in the impact resistance. When more than 10 part by mass, the flame retardancy, heat resistance and stiffness are likely to be lowered. Therefore, the use of up to 10 parts by mass is usually sufficient. The polycarbonate resin composition of the present invention exhibits excellent effect when the functionalized silicone compound as the component B and the core-shell type rubber-like graft copolymer as the component C are combinedly used in small amounts. When another graft copolymer is used in place of the core-shell type rubber-like graft copolymer, although the impact resistance is improved in some cases, the flame retardancy cannot be maintained at high level.

The object to improve the moldability and extrudability (melt fluidity), the impact resistance and the flame retardancy can be fully attained by the polycarbonate resin composition containing the above three components A to C. However, the first polycarbonate resin composition may further contains a known anti-dripping agent for preventing the melt-dripping of the composition, for example, during the burning test.

COMPONENT D: Polyfluoroolefin Resin

As the anti-dripping agent, there may be suitably used a polyfluoroolefin resin. The polyfluoroolefin resin is a polymer or copolymer containing fluoroethylene units. Examples of the polyfluoroolefin resin include difluoroethylene polymer, tetrafluoroethylene polymer, tetrafluoroethylene-hexafluoropropylene copolymer, and copolymer of tetrafluoroethylene and fluorine-free ethylenic monomer with polytetrafluoroethylene (PTFE) having an average molecular weight of preferably 500,000 or higher, more preferably 500,000 to 10,000,000 being preferred. All of conventionally known polytetrafluoroethylenes may be used in the present invention.

Still higher anti-dripping properties can be attained by a fibrillatable polytetrafluoroethylene. Examples of the fibrillatable polytetrafluoroethylene (PTFE) include, not particularly limited to, those classified into Type 3 of ASTM standard, specifically, Teflon 6-J available from Mitsui-Du Pont Fluorochemicals Co., Ltd., Polyflon D-1, Polyflon F-103 and Polyflon F-201 available from Daikin Industries, Ltd., and CD076 available from Asahi-ICI Fluoropolymers Co., Ltd. Examples of the polytetrafluoroethylene other than those classified into Type 3 include Argoflon F5 available from Montefluos Co., Ltd., and Polyflon MPA and Polyflon FA-100 available from Daikin Industries, Ltd.

These polytetrafluoroethylenes (PTFE) may be used alone or in combination of two or more. The fibrillatable polytetrafluoroethylene is produced, for example, by polymerizing tetrafluororethylene at 0 to 200°C, preferably 20 to 100°C under 0.01 to 1 MPa in an aqueous solvent in the presence of sodium, potassium or ammonium peroxydisulfide.

The content of the polyfluoroolefin resin in the composition is 0.02 to 5 parts by mass, preferably 0.05 to 2 parts by mass based on 100 parts by mass of the component A. When less than 0.02 part by mass, the composition fails to show a sufficient anti-dripping property upon combustion. When more than 5 parts by mass, no additional improvement is attained and the impact resistance and the appearance of the shaped article tend to be adversely affected. Therefore, the content of the polyfluoroolefin resin may be appropriately determined depending upon required degree of flame retardancy, e.g., V-0, V-1 or V-2 of UL-94, and contents of the other components.

COMPONENT E: Inorganic Filler

The first polycarbonate resin composition may further contain an inorganic filler, if required, to further improve stiffness and flame retardancy of the shaped article. Examples of the inorganic filler include talc, mica, kaolin, diatomaceous earth, calcium carbonate, calcium sulfate, barium sulfate, glass fibers, carbon fibers and potassium titanate fibers. Of these inorganic fillers, preferred are plate-like inorganic fillers such as talc and mica, and fibrous inorganic fillers such as glass fibers and carbon fibers. Talc is a hydrous magnesium silicate and any commercially available talc may be used in the present invention. The inorganic filler has an average particle size of 0.1 to 50 μm, preferably 0.2 to 20 μm. By incorporating the inorganic filler, particularly talc, the stiffness is improved and in some cases the use amount of the functionalized silicone compound can be reduced.

The content of the inorganic filler in the composition is 1 to 100 parts by mass, preferably 2 to 50 parts by mass based on 100 parts by mass of the component A. When less than 1 part by mass, the intended improvement in the stiffness and the flame retardancy is not obtained sufficiently. When more than 100 parts by mass, the impact resistance and the melt fluidity may be lowered in some cases. The content of the inorganic filler may be appropriately determined in view of required properties of shaped article and the moldability/extrudability of the composition, e. g., thickness of shaped article and resin flow length.

COMPOSITION F: Additives

In addition to the essential components A, B and C and the optional components D and E, the first polycarbonate resin composition of the present invention may further contain, if required, a thermoplastic resin such as polyester resin and polyamide resin and an additive ordinarily used for the thermoplastic resins to improve the moldability extrudability, the impact resistance, the appearance, the weather resistance, the stiffness, etc. Examples of the additive include phenol-based, phosphorus-based or sulfur-based antioxidant, antistatic agent, polyamide—polyether block copolymer (permanent antistatic agent), benzotriazole-based or benzophenone-based ultraviolet absorber, hindered amine-based light stabilizer (weatherproof agent), plasticizer, biocide, compatibilizer, colorant (dye and pigment), etc. These optional components may be added in such an amount as not to adversely affect the properties of the polycarbonate resin composition according to the present invention.

Production of First Polycarbonate Resin Composition

The first polycarbonate resin composition is produced by blending and kneading the components A to C and the optional components D to F in a predetermined mixing ratio. The blending and kneading may be performed using a mixing apparatus ordinarily used for the production of resin compositions. For example, after pre-blending in a ribbon blender or a drum blender, the kneading is effected in a Banbury mixer, a single-screw extruder, a twin-screw extruder, a multi-screw extruder or a co-kneader. The kneading may be effected at 240 to 300°C. The melt-kneading and the subsequent extrusion may be suitably conducted using an extrusion machine, especially a vented extrusion machine. The components other than the polycarbonate resin may be preliminarily melt-kneaded with a polycarbonate resin or another thermoplastic resin to prepare a master batch which is then mixed with the polycarbonate resin component.

Molding and Extrusion of First Polycarbonate Resin Composition

The first polycarbonate resin composition may be directly extruded into the final product using the above melt-kneading machine. Alternatively, the resin composition may be first pelletized and then formed into shaped articles by injection molding, injection compression molding, extrusion, blow molding, press molding, vacuum molding or foam molding. The first polycarbonate resin composition is preferably used in the production of injection-molded articles where the composition is pelletized by the melt-kneading method and then injection-molded or injection compression-molded into a shaped article. To avoid sink marks on the surface or to reduce the weight of shaped articles, a gas injection molding may be employed.

The shaped articles of the first polycarbonate resin composition include housings or parts for copying machine, facsimile, TV, radio, tape recorder, video recorder, personal computer, printer, telephone, information terminal device, refrigerator, electric oven, etc., and shaped articles for other application field such as automobile parts.

2. Second Polycarbonate Resin Composition

The second polycarbonate resin composition comprises 100 parts by mass of a resin mixture comprising (A') 1 to 99% by mass of an end-modified polycarbonate resin terminated with a ($C_{10}$-$C_{35}$ alkyl)phenoxy group or a polycarbonate mixture comprising the end-modified polycarbonate resin and another polycarbonate resin and (B') 99 to 1% by mass of a styrene resin; and (C') 0.01 to 5 parts by mass of a polyfluoroolefin resin.

COMPONENT A': Polycarbonate Resin

The component A' of the second polycarbonate resin composition comprises an end-modified polycarbonate resin terminated with a phenoxy group having $C_{10}$-$C_{35}$, preferably $C_{10}$-$C_{25}$ alkyl group, or a polycarbonate mixture of the end-modified polycarbonate resin and another polycarbonate resin.

The end-modified polycarbonate resin used as the component A' is the same as the end-modified PC for the component A of the first polycarbonate resin composition.

The component A' may be the end-modified PC alone or a mixture of the end-modified PC and another polycarbonate resin. Since the moldability and extrudability (melt fluidity) of the resultant composition is influenced by the ratio of the ($C_{10}$-$C_{35}$ alkyl)phenoxy ends to the total molecular ends of the polycarbonate resins in the component A', the content of the end-modified PC in the mixture is, not limitation purpose, usually 20% by mass or higher, preferably 50% by mass or higher, more preferably 70% by mass or higher. The content may be suitably determined in consideration of the proportion of the ($C_{10}$-$C_{35}$ alkyl)phenoxy group in the end-modified PC, kinds of other molecular ends, kinds of molecular ends of other polycarbonate resins, intended melt fluidity, etc.

The polycarbonate resin other than the end-modified PC may be the same as those for the first polycarbonate resin composition.

COMPONENT B': Styrene Resin

The styrene resin as the component B' of the second polycarbonate resin composition is a polymer produced by polymerizing a monomer or monomer mixture comprising 20 to 100% by mass of an aromatic monovinyl monomer such as styrene and α-styrene, 0 to 60% by mass of a vinyl cyanide monomer such as acrylonitrile and methacrylonitrile, and 0 to 50% by mass of another vinyl monomer copolymerizable with the above monomers such as maleimide and methyl (meth)acrylate. If the optional monomer or monomers are used, the amount ratio is preferably 5 to 60% by mass for the vinyl cyanide monomer, and 5 to 50% by mass for another vinyl monomer. Examples of the styrene resin include polystyrene (general-purpose polystyrene) and an acrylonitrile-styrene copolymer (AS resin).

The styrene resin is preferably a rubber-modified styrene resin, more preferably an impact-resistant rubber-modified styrene resin prepared by graft-polymerizing at least a styrene monomer to a rubber. Examples of the rubber-modified styrene resin include impact-resistant polystyrene (HIPS) prepared by polymerizing styrene with a rubber such as polybutadiene, ABS resin prepared by polymerizing acrylonitrile and styrene with polybutadiene, and MBS resin prepared by polymerizing methyl methacrylate and styrene with polybutadiene. These rubber-modified styrene resins may be used in combination of two or more, or in the form of a mixture with the rubber-unmodified styrene resin described above.

The rubber content of the rubber-modified styrene resin is preferably 2 to 50% by mass, more preferably 5 to 30% by mass, most preferably 5 to 15% by mass. When the rubber content is less than 2% by mass, the impact resistance becomes insufficient. When the rubber content is more than 50% by mass, the problems such as reduction of the heat stability, lowering of the melt fluidity, gel formation and coloration are likely to arise.

Examples of the rubber include polybutadiene, rubber-like polymers containing acrylate and/or methacrylate, styrene-butadiene-styrene rubber (SBS), styrene-butadiene rubber (SBR), butadiene-acrylic rubber, isoprene rubber, isoprene-styrene rubber, isoprene-acrylic rubber and ethylenepropylene rubber. Of these rubbers, particularly preferred is polybutadiene. The polybutadiene may be a low-cis polybutadiene, e.g., polybutadiene containing 1 to 30 mol% of 1,2-vinyl bonding and 30 to 42 mol% of 1,4-cis bonding, a high-cis polybutadiene, e.g., polybutadiene containing 20 mol% or less of 1,2-vinyl bonding and 78 mol% or more of 1,4-cis bonding, or a mixture thereof.

The second polycarbonate resin composition is improved in the melt fluidity by blending the polycarbonate resin (component A') with the styrene resin (component B'). The blending ratio (component A'/component B') by mass percent is 1-99%/99-1%, preferably 50-98%/50-2%, more preferably 70-95%/30-5%. When the content of the polycarbonate resin as the component A' is less than 1% by mass, the heat resistance and strength are insufficient. When the content of the styrene resin as the component B' is less than 1% by mass, a sufficient improvement in the moldability cannot be obtained. When the rubber-modified styrene resin is used as the component B', the blending ratio of polycarbonate resin/rubber-modified styrene resin (component A'/component B') by mass percent is preferably 70-98%/30-2%.

The blending ratio of the component A' to the component B' is suitably selected from the above range according to molecular weight of the end-modified PC, molecular weight of the polycarbonate resin other than the end-modified PC, kind of the styrene resin, melt flow rate, rubber content, application, size and thickness of shaped article, etc.

COMPONENT C': Polyfluoroolefin Resin

The second polycarbonate resin composition contains a polyfluoroolefin resin to improve the flame retardancy and prevent the melt-dripping upon combustion, e.g., during burning test. The polymers and copolymers as those described with respect to the component D of the first polycarbonate resin composition are used as the polyfluoroolefin resin for the second polycarbonate resin composition.

The content of the polyfluoroolefin resin is 0.02 to 5 parts by mass, preferably 0.05 to 2 parts by mass based on 100 parts by mass of the resin mixture of the components A' and B'. When the content of the polyfluoroolefin resin is less than 0.02 part by mass, the anti-dripping property is insufficient even when the flame retardancy is improved in a desired degree. A content more than 5 parts by mass is likely to adversely affect the impact resistance and the appearance of shaped articles, though produces no additional effect. Therefore, the content of the polyfluoroolefin resin may be appropriately determined depending upon required degree of flame retardancy, e.g., V-0, V-1 or V-2 of UL-94, and contents of the other components.

COMPONENT D': Silicone Compound

To further improve the flame retardancy, the second polycarbonate resin composition may optionally contain the same functionalized silicone compound as those for the component B of the first polycarbonate resin composition.

The content of the functionalized silicone compound is 0.1 to 10 parts by mass, preferably 0.2 to 5 parts by mass based on 100 parts by mass of the resin mixture of the components A' and B'. When the content is less than 0.1 part by mass, the improvement of the flame retardancy is insufficient. When the content is more than 10 parts by mass, no additional improvement cannot be obtained. When the PC-POS copolymer is used, the content of the functionalized silicone compound is appropriately determined in consideration of the total amount of silicones in the composition. Specifically, since the silicones from the PC-POS copolymer are already present in the composition, the content of the functionalized silicone compound can be reduced correspondingly. Thus, even when the content of the PC-POS copolymer is reduced, the flame retardancy of the composition can be maintained at high level.

COMPONENT E': Inorganic Filler

To improve stiffness, etc., the second polycarbonate resin composition may optionally contain the same inorganic filler as those for the component E of the first polycarbonate resin composition.

The content of the inorganic filler is 1 to 100 parts by mass, preferably 2 to 50 parts by mass based on 100 parts by mass of the resin mixture of the components A' and B'. When less than 1 part by mass, the intended improvement in the stiffness and the flame retardancy is not obtained sufficiently. When more than 100 parts by mass, the impact resistance and the melt fluidity may be lowered in some cases. The content of the inorganic filler may be appropriately determined in view of required properties of shaped article and the moldability/extrudability of the composition, e. g., thickness of shaped article and resin flow length.

COMPONENT F': Additives

To improve the moldability/extrudability, impact resistance, appearance, weather resistance, stiffness, etc., the second polycarbonate resin composition may further contain the same additives as those for the component F of the first polycarbonate resin composition.

Production of Second Polycarbonate Resin Composition

The second polycarbonate resin composition is produced by blending and kneading the components A' to C' and the optional components D' to F' in a predetermined mixing ratio. The blending and kneading may be performed in the same manner as in the first polycarbonate resin composition.

Molding and Extrusion of Second Polycarbonate Resin Composition

The second polycarbonate resin composition may be formed into various shaped articles in the same manner as in the first polycarbonate resin composition.

Like the first polycarbonate resin composition, the shaped articles of the second polycarbonate resin composition is used as housings or parts for electric and electronic devices as well as parts for other application fields such as automobile parts.

The present invention will be described in more detail by reference to the following examples. However, it should be noted that the following examples are illustrative and not intended to limit the present invention thereto.

PRODUCTION EXAMPLE 1: Production of Polycarbonate Oligomer

Into 400 L of a 5% sodium hydroxide aqueous solution, was dissolved 60 kg of bisphenol A to prepare an aqueous sodium hydroxide solution of bisphenol A.

Then, at room temperature, the aqueous sodium hydroxide solution of bisphenol A and methylene chloride were respectively introduced at flow rates of 138 L/hr and 69 L/hr into a tubular reactor of 10 mm inner diameter and 10 m length through an orifice plate. Simultaneously, phosgene was blown into the reactor at a flow rate of 10.7 kg/hr to continue the reaction for 3 hours. The tubular reactor used was of a double structure type having a jacket through which cooling water was passed to maintain the reaction solution being discharged at 25°C. The reaction solution being discharged was adjusted to pH 10 to 11.

The reaction solution was allowed to stand for phase separation. By removing the water phase, was obtained 220 L of the methylene chloride phase containing a polycarbonate oligomer at a concentration of 317 g/L. The polymerization degree of the oligomer was 2 to 4 and the concentration of chloroformate group was 0.7N.

PRODUCTION EXAMPLE 2: Production of End-Modified Polycarbonate 1

Into a 50-L vessel equipped with a stirrer, was charged 10 L of the PC oligomer obtained in Production Example 1, into which 162 g of p-dodecylphenol (having branched dodecyl group) available from Yuka Schenectady Co., Ltd. was dissolved. After adding an aqueous sodium hydroxide solution (53 g of sodium hydroxide in 1 L water) and 5.8 cc of triethylamine to the vessel, the reaction was carried out for one hour under stirring at 300 rpm. The resultant reaction solution was mixed with a sodium hydroxide solution of bisphenol A (720 g of bisphenol A and 412 g of sodium hydroxide in 5.5 L of water), and then with 8 L of methylene chloride to continue the reaction for one hour under stirring at 500 rpm. After completion of the reaction, 7 L of methylene chloride and 5 L of water were added to the reaction solution, and the resultant mixture was stirred for 10 minutes at 500 rpm. After stirring, the resultant reaction solution was allowed to stand for phase separation into organic phase and water phase. The organic phase was successively washed with 5 L of an alkali solution (0.03 N NaOH), 5 L of an acidic solution (0.2 N HCl), and two portions of 5 L water. Thereafter, methylene chloride was evaporated away to obtain flake-like polymer. The viscosity-average molecular weight of the polymer was 17,500.

PRODUCTION EXAMPLE 3: Production of Alkylphenol

Into a reactor equipped with a baffle and agitating blades, were charged 300 parts by weight of phenol, 105 parts by weight of a 1-eicosene-1-docosene-1-tetracosene mixture (53.3:40.2:6.5 by mol), and 11 parts by weight a strongly acidic polystyrene-based sulfonic acid type cation-exchange resin (Amberlyst 15 available from Rohm & Haas Co., Ltd.) as a catalyst. The reaction was carried out at 120°C for 3 hours under stirring.

PRODUCTION EXAMPLE 4: Production of End-Modified Polycarbonate 2

The same procedure as in Production Example 2 was repeated except that 240 g of the alkylphenol obtained in Production Example 3 was used instead of 162 g of p-dodecylphenol, thereby obtaining an end-modified polycarbonate 2. The viscosity-average molecular weight of the polymer was 17,500.

PRODUCTION EXAMPLE 5: Production of Reactive PDMS

A mixture of 1,483 g of octamethylcyclotetrasiloxane, 96 g of 1,1,3,3-tetramethyldisiloxane and 35 g of 86% sulfuric acid was stirred at room temperature for 17 hours. After removing the oil phase, 25 g of sodium hydrogen carbonate was added. The mixture was stirred for one hour, filtered and then vacuum-distilled at 150°C under 3 Torr (4 x $10^2$ Pa) to remove low-boiling substances, thereby obtaining an oil.

A mixture of 60 g of 2-allylphenol and 0.0014 g of platinum chloride-alcoholate complex was mixed with 294 g of the oil at 90°C. The resultant mixture was stirred at 90 to 115°C for 3 hours. The obtained reaction product was extracted with methylene chloride, and the extract was washed with 80% aqueous methanol three times to remove the excess of 2-allylphenol. The washed product was dried over anhydrous sodium sulfate, and heated in vacuum at 115°C to remove the solvent. The NMR measurement of the phenol-terminated PDMS thus obtained showed that the number of dimethylsilanoxy repeating units was 30.

PRODUCTION EXAMPLE 6: Production of PC-PDMS Copolymer

A solution of 182 g of the reactive PDMS obtained in Production Example 5 in 2 L of methylene chloride was added with 10 L of the PC oligomer obtained in Production Example 1. After adding a solution of 26 g of sodium hydroxide in 1 L of water and 5.7 cc of triethylamine to the mixture, the reaction was carried out at room temperature for one hour under stirring at 500 rpm.

Thereafter, the reaction solution was mixed with a solution of 600 g of bisphenol in 5 L of a 5.2% sodium hydroxide aqueous solution, 8 L of methylene chloride and 96 g of p-t-butylphenol, and the reaction was continued at room temperature for 2 hours while stirring at 500 rpm.

After completion of the reaction, the reaction solution was mixed with 5 L of methylene chloride, washed with 5 L of water, alkali-washed with 5 L of 0.03 N sodium hydroxide aqueous solution, acid-washed with 5 L of 0.2 N hydrochloric acid, and further washed with two portions of 5 L water. Finally, methylene chloride was removed to obtain flake-like PC-PDMS copolymer. The PC-PDMS copolymer thus obtained was vacuum-dried at 120°C for 24 hours. The viscosity-average molecular weight was 17,000, and the PDMS content was 4.0% by mass.

The viscosity-average molecular weight and the PDMS content were measured by the following methods.

(1) Viscosity-average molecular weight (Mv)

The viscosity of a resin solution in methylene chloride was measured at 20°C using Ubbellohde viscometer. From the results, the intrinsic viscosity [η] was determined. The viscosity-average molecular weight (Mv) was calculated from the following formula:

$$[\eta] = 1.23 \times 10^{-5} Mv^{0.83}$$

(2) PDMS content

The PDMS content was determined from the intensity ratio of $^1$H-NMR peak at 1.7 ppm assigned to methyl of isopropyl of bisphenol A and $^1$H-NMR peak at 0.2 ppm assigned to methyl of dimethylsiloxane.

PRODUCTION EXAMPLE 7: Production of End-Modified PC-PDMS Copolymer

The procedure of Production Example 6 was repeated except that 168 g of p-dodecylphenol (having branched dodecyl group) used in Production Example 2 was used instead of 96 g of p-t-butylphenol, thereby obtaining an end-modified PC-PDMS copolymer, which was vacuum-dried at 120°C for 24 hours. The viscosity-average molecular weight was 17,000, and the PDMS content was 4.0% by mass.

EXAMPLES 1 to 10 and COMPARATIVE EXAMPLES 1 to 11

The respective components were blended in the blending ratio shown in Table 1 (component A: % by mass; other components: part by mass based on 100 parts by mass of the component A). The resultant blend was fed into a vented twin-screw extruder (TEM35 available from Toshiba Kikai Co., Ltd.), melt-kneaded at 280°C, and extruded into pellets. In all the examples and comparative examples, 0.2 part by mass of Irganox 1076 (Ciba Speciality Chemicals Co., Ltd.) and 0.1 part by mass of Adekastab C (Asahi Denka Kogyo Co., Ltd.) were blended as antioxidants. The resultant pellets were dried at 120°C for 12 hours, and then injection-molded into a test piece at a molding temperature of 270°C and a mold temperature of 80°C. The test piece was subjected to various tests to evaluate the properties. The results are shown in Table 1.
The components used in the respective compositions and methods for evaluating properties are shown below.

Components of Resin Composition

(A) Polycarbonate Resin

| | |
|---|---|
| PC-1: | Toughlon A1700 (Idemitsu Petrochemical Co., Ltd.) |
| | Bisphenol A polycarbonate resin |
| | Melt flow rate (MFR): 27 g/10 min (JIS K7210; 300°C and 11.77 N load) |
| | Viscosity-average molecular weight: 17,000 |
| | Terminated with p-t-butylphenoxy group |
| PC-2: | Toughlon A1500 (Idemitsu Petrochemical Co., Ltd.) |
| | Bisphenol A polycarbonate resin |
| | MFR: 50 g/10 min |
| | Viscosity-average molecular weight: 15,000 |
| | Terminated with p-t-butylphenoxy group |
| End-modified PC 1: | p-Dodecylphenoxy-terminated polycarbonate resin obtained in Production Example 2 |
| End-modified PC 2: | Alkylphenol-terminated polycarbonate resin obtained in Production Example 4 |
| PC-PDMS: | Bisphenol A-polydimethylsiloxane (PDMS) copolymer obtained in Production Example 6 |
| | PDMS content: 4.0% by mass |
| | Viscosity-average molecular weight: 17,000 |
| | Terminated with p-t-butylphenoxy group |
| Modified PC-PDMS: | Bisphenol A-polydimethylsiloxane (PDMS) copolymer obtained in Production Example 7 |
| | PDMS content: 4.0% by mass |
| | Viscosity-average molecular weight: 17,100 |
| | Terminated with p-dodecylphenoxy group |

(B) Silicone Compound

| | |
|---|---|
| Silicone-1: | Vinyl- and methoxy-containing methylphenylsilicone |
| | KR-219 (Shin-Etsu Chemical Co., Ltd.) |
| | Kinematic viscosity: 18 mm$^2$/s |
| Silicone-2: | Methoxy-containing dimethylsilicone |
| | KC-89 (Shin-Etsu Chemical Co., Ltd.) |
| | Kinematic viscosity: 20 mm$^2$/s |
| Silicone- 3: | Dimethylsilicone; |
| | SH200 (Shin-Etsu Chemical Co., Ltd.) |

Kinematic viscosity: 350 mm$^2$/s

(C) Core-Shell Type Rubber-Like Graft Elastomer

Rubber-like elastomer-1:   Composite rubber-based graft copolymer
                                   Metablen S2001 (Mitsubishi Rayon Co., Ltd.)
Rubber-like elastomer-2:   MBS-based graft copolymer
                                   Metablen C223 (Mitsubishi Rayon Co., Ltd.)
                                   Polybutadiene content: 60% by mass or more
Rubber-like elastomer-3:   SBS-based graft copolymer (comparative)
                                   Vector 8550-5 (Dexco Polymers Co., Ltd.)

(D) Polyfluoroolefin Resin

PTFE:    CD 076 (Asahi-ICI Fluoropolymers Co., Ltd.)

Evaluation Methods

(1) Melt Fluidity

Melt flow rate (MFR): measured according to JIS K 7210
Temperature: 300°C
Load: 11.77 N

(2) Izod Impact Strength

Measured at 23°C according to ASTM D256
Thickness: 3.2 mm

(3) Flame Retardancy

Measured according to UL94 burning test (Underwriters' Laboratories, Inc. Bulletin UL-94, Burning Test for Classifying Materials)
Thickness of test piece: 1.5 mm
A test piece which did not fall under any of the ratings, V-0, V-1 and V-2, was classified as "V-2NG."

(4) Grease Resistance

Evaluated by a test method for chemical resistance (limiting distortion on 1/4 ellipse).
As shown in Fig. 1 (perspective view), a test piece of 3 mm thick was fixed on the curved surface of 1/4 ellipse. After applying Albania grease (Showa Shell Sekiyu Co., Ltd.), the test piece was allowed to stand for 48 hours. A minimum length (X) at which cracks were first generated was measured, and the limiting distortion (%) was calculated from the following equation:

$$\text{Limiting distortion (\%)} = \frac{b}{2a^2}\left[1-\left(\frac{1}{a^2}-\frac{b^2}{a^4}\right)X^2\right]^{-3/2} \times t \times 100$$

wherein t is the thickness of the test piece; and a, b and X are dimensions as shown in Fig. 1.

(5) Recyclability

The pellets formed of the respective compositions were injection molded into a housing for notebook-type personal computer (A4 size) at a molding temperature of 300°C and a mold temperature of 80°C. The molded housing was crushed to prepare a 100% recycling material. The recycling material was injection-molded again under the same conditions as above to prepare a test piece, which was tested on Izod impact strength and color change.

Izod Impact Strength: Measured by the same method as above.

Color Change: Tested according to JIS H7103 (yellowing test) to measure the hue (L, a, b) of the test piece before and after recycling by a color difference meter, and calculated the change in hue ($\Delta$E).

Table 1

| | Ex. 1 | Ex. 2 | Com. Ex. 1 | Com. Ex. 4 | Com. Ex. 5 |
|---|---|---|---|---|---|
| Composition | | | | | |
| Component A (% by mass) | | | | | |
| PC-1 | – | – | 100 | 50 | 100 |
| PC-2 | – | – | – | 50 | – |
| end-modified PC1 | 100 | 100 | – | – | – |
| PC-PDMS | – | – | – | – | – |
| end-modified PC-PDMS | – | – | – | – | – |
| PDMS content (% by mass) | 0 | 0 | 0 | 0 | 0 |
| Component B (part by mass) | | | | | |
| silicone 1 | 3 | 3 | 3 | 3 | 3 |
| silicone 2 | – | – | – | – | – |
| silicone 3 (comparative) | – | – | – | – | – |
| Component C (part by mass) | | | | | |
| rubber-like elastomer 1 | 1 | 1 | 1 | 1 | 1 |
| rubber-like elastomer 2 | – | – | – | – | – |
| rubber-like elastomer 3 (comparative) | – | – | – | – | – |
| Component D (part by mass) | | | | | |
| PTFE | – | 0.5 | – | 0.5 | 0.5 |
| Evaluation Results | | | | | |
| MFR (g/10 min) | 36 | 36 | 28 | 36 | 28 |
| Izod impact strength (kJ/m$^2$) | 60 | 60 | 65 | 20 | 65 |
| Flame retardancy (UL-94) | V-2 | V-0 | V-2NG | V-0 | V-0 |
| Grease resistance (%) | 0.9 | 0.8 | 0.8 | 0.4 | 0.8 |
| Recyclability | | | | | |
| Izod impact strength (kJ/m$^2$) | 60 | 60 | 60 | 10 | 65 |
| color change ($\Delta$E) | 1.5 | 1.5 | 1.5 | 1.2 | 1.2 |

Table 1 (contd.)

| | Com. Ex. 2 | Com. Ex.3 | Ex. 3 | Ex. 4 |
|---|---|---|---|---|
| Composition | | | | |
| Component A (% by mass) | | | | |
| PC-1 | – | – | – | 25 |
| PC-2 | – | – | – | – |
| end-modified PC1 | 100 | 100 | 75 | 50 |
| PC-PDMS | – | – | 25 | 25 |
| end-modified PC-PDMS | – | – | – | – |
| PDMS content (% by mass) | – | – | 1 | 1 |
| Component B (part by mass) | | | | |
| silicone 1 | – | 3 | 1 | 1 |
| silicone 2 | – | – | – | – |
| silicone 3 (comparative) | – | – | – | – |
| Component C (part by mass) | | | | |
| rubber-like elastomer 1 | 1 | – | 2 | 2 |
| rubber-like elastomer 2 | – | – | – | – |

| | | | | |
|---|---|---|---|---|
| rubber-like elastomer 3 (comparative) | – | – | – | – |
| Component D (part by mass) | | | | |
| PTFE | 0.5 | 0.5 | 0.3 | 0.3 |
| Evaluation Results | | | | |
| MFR (g/10 min) | 34 | 36 | 35 | 33 |
| Izod impact strength (kJ/m$^2$) | 60 | 15 | 60 | 65 |
| Flame retardancy (UL·94) | V·2NG | V·0 | V·0 | V·0 |
| Grease resistance (%) | 0.8 | 0.8 | 0.7 | 0.8 |
| Recyclability | | | | |
| Izod impact strength (kJ/m$^2$) | 60 | 10 | 60 | 65 |
| color change ($\Delta$E) | 1.5 | 1.2 | 1.4 | 1.4 |

Table 1 (contd.)

| | Ex. 5 | Ex. 6 | Com. Ex. 6 | Com. Ex. 7 |
|---|---|---|---|---|
| Composition | | | | |
| Component A (% by mass) | | | | |
| PC-1 | – | – | – | – |
| PC-2 | – | – | – | – |
| end-modified PC1 | 50 | 75 | 75 | 75 |
| PC-PDMS | 50 | – | 25 | 25 |
| end-modified PC-PDMS | – | 25 | – | – |
| PDMS content (% by mass) | 2 | 1 | 1 | 1 |
| Component B (part by mass) | | | | |
| silicone 1 | – | 1 | 1 | – |
| silicone 2 | 0.5 | – | – | – |
| silicone 3 (comparative) | – | – | – | 1 |
| Component C (part by mass) | | | | |
| rubber-like elastomer 1 | – | 2 | – | 2 |
| rubber-like elastomer 2 | 1 | – | – | – |
| rubber-like elastomer 3 (comparative) | – | – | 2 | – |
| Component D (part by mass) | | | | |
| PTFE | 0.3 | 0.3 | 0.3 | 0.3 |
| Evaluation Results | | | | |
| MFR (g/10 min) | 35 | 36 | 34 | 35 |
| Izod impact strength (kJ/m$^2$) | 50 | 60 | 55 | 60 |
| Flame retardancy (UL·94) | V·0 | V·0 | V·2NG | V·2NG |
| Grease resistance (%) | 0.7 | 0.7 | 0.6 | 0.7 |
| Recyclability | | | | |
| Izod impact strength (kJ/m$^2$) | 45 | 60 | 40 | 60 |
| color change ($\Delta$E) | 1.2 | 1.5 | 3.5 | 1.4 |

Table 1 (contd.)

| | Ex. 7 | Ex. 8 | Ex. 9 | Ex. 10 |
|---|---|---|---|---|
| Composition | | | | |

16

| | | | | |
|---|---|---|---|---|
| Component A (% by mass) | | | | |
| PC-1 | — | — | 25 | — |
| PC-2 | — | — | — | — |
| end-modified PC2 | 100 | 75 | 50 | 100 |
| PC-PDMS | — | 25 | 25 | — |
| Component B (part by mass) | | | | |
| silicone 1 | 3 | 1 | 1 | 3 |
| silicone 2 | — | — | — | — |
| silicone 3 (comparative) | — | — | — | — |
| Component C (part by mass) | | | | |
| rubber-like elastomer 1 | 1 | 2 | 2 | 1 |
| rubber-like elastomer 2 | — | — | — | — |
| rubber-like elastomer 3 (comparative) | — | — | — | — |
| Component D (part by mass) | | | | |
| PTFE | 0.5 | 0.3 | 0.3 | — |
| Silicone content of component A (% by mass) | 0 | 1 | 1 | 0 |
| Total silicone content (% by mass) | 3 | 2 | 2 | 3 |
| Silicone ratio=component A/component B | 0 | 1 | 1 | 0 |
| Evaluation Results | | | | |
| MFR (g/10 min) | 45 | 47 | 44 | 45 |
| Izod impact strength (kJ/m$^2$) | 60 | 55 | 65 | 60 |
| Flame retardancy (UL-94) | V-0 | V-0 | V-0 | V-2 |
| Grease resistance (%) | 1 | 0.9 | 0.8 | 1 |
| Recyclability | | | | |
| Izod impact strength (kJ/m$^2$) | 60 | 50 | 60 | 60 |
| color change (ΔE) | 1.4 | 1.2 | 1.4 | 1.3 |

Table 1 (contd.)

| | Com. Ex. 8 | Com. Ex. 9 | Com. Ex. 10 | Com. Ex. 11 |
|---|---|---|---|---|
| Composition | | | | |
| Component A (% by mass) | | | | |
| PC-1 | — | — | — | — |
| PC-2 | — | — | — | — |
| end-modified PC2 | 100 | 100 | 75 | 75 |
| PC-PDMS | — | — | 25 | 25 |
| Component B (part by mass) | | | | |
| silicone 1 | — | 3 | 1 | — |
| silicone 2 | — | — | — | — |
| silicone 3 (comparative) | — | — | — | 1 |
| Component C (part by mass) | | | | |
| rubber-like elastomer 1 | 1 | — | — | 2 |
| rubber-like elastomer 2 | — | — | — | — |
| rubber-like elastomer 3 (comparative) | — | — | 2 | — |
| Component D (part by mass) | | | | |
| PTFE | 0.5 | 0.5 | 0.3 | 0.3 |
| Silicone content of component A (% by mass) | 0 | 0 | 1 | 1 |
| Total silicone content (% by mass) | 0 | 3 | 2 | 2 |
| Silicone ratio=component A/component B | 0 | 0 | 1 | 1 |

| Evaluation Results | | | | |
|---|---|---|---|---|
| MFR (g/10 min) | 43 | 45 | 46 | 46 |
| Izod impact strength (kJ/m$^2$) | 60 | 15 | 55 | 60 |
| Flame retardancy (UL·94) | V·2NG | V·0 | V·2NG | V·2NG |
| Grease resistance (%) | 1 | 0.8 | 0.7 | 0.7 |
| Recyclability | | | | |
| Izod impact strength (kJ/m$^2$) | 60 | 10 | 40 | 55 |
| color change (ΔE) | 1.3 | 1.4 | 3.5 | 1.4 |

From Table 1, it would appear that the shaped articles produced from the polycarbonate resin compositions of the present invention was improved in the moldability (melt fluidity) with the impact strength maintained high. Also, the shaped articles of the invention are excellent in the grease resistance and recyclability. Further, it can be seen that the molded articles incorporated with PTFE are rated V-0 to show an excellent flame retardancy.

EXAMPLES 11 to 18 and COMPARATIVE EXAMPLES 12 to 17

The respective components shown in Table 2 were blended in the blending ratio shown in Table 2 (components A' and B': % by mass; other components: part by mass based on 100 parts by mass of the components A' and B'). In the same manner as in Examples 1 to 10 and Comparative Examples 1 to 11, each composition thus prepared was molded into a test piece, which was subjected to various tests to evaluate the properties. The results are shown in Table 2.
The components used in the compositions and methods for evaluating properties are shown below.

(A') Polycarbonate Resin

| | |
|---|---|
| PC-2: | Same as above |
| PC-3: | Toughlon A1700 (Idemitsu Petrochemical Co., Ltd.) |
| | Bisphenol A polycarbonate resin |
| | MFR: 19 g/10 min (300°C and 11.77 N load) |
| | Viscosity-average molecular weight: 19,000 |
| | Terminated with p-t-butylphenoxy group |
| End-modified PC-1: | Same as above |
| PC-PDMS: | Same as above |
| End-modified PC-PDMS: | Same as above |

(B') Styrene Resin

| | |
|---|---|
| HIPS: | High impact resistant polystyrene (HIPS) |
| | Idemitsu PS IT44 (styrene-grafted polybutadiene available from |
| | Idemitsu Petrochemical Co., Ltd.) |
| | Rubber content: 10% by mass |
| | MFR: 8 g/10 min (JIS K 7210; 200°C and 49.03 N load) |
| ABS: | Acrylonitrile-butadiene-styrene copolymer (ABS) |
| | DP-611 (Technopolymer Co., Ltd.) |
| | MFR: 2 g/10 min |

(C') Polyfluoroolefin Resin

PTFE:    Same as above

(D') Silicone Compound

Silicone-1:    Same as above
Silicone-2:    Same as above
Silicone-3:    Same as above

(E') Inorganic Filler

Talc
    FFR (Asada Seifun Co., Ltd.)
    Average particle size: 0.7 μm
Glass Fiber
    03MA419 (Asahi Fiber Glass Co., Ltd.)
    Fiber diameter: 13 μm
    Fiber length: 3 mm

Evaluation Methods

(1) Melt Fluidity

Same as above

(2) Izod Impact Strength

Same as above

(3) Flexural Modulus

Measured according to JIS K 7202
Span: 60 mm
Test Speed: 2.0 mm/min

(4) Flame Retardancy

Measured in the same manner as above
Thickness of test piece: 1.5 mm and 2.5 mm

(5) Grease Resistance

Same as above

Table 2

| | Ex. 11 | Com. Ex. 12 | Ex. 12 | Com. Ex. 13 | Com. Ex. 14 |
|---|---|---|---|---|---|
| Composition | | | | | |
| Component A' (% by mass) | | | | | |
| PC-3 | – | 90 | – | 90 | 45 |
| PC-2 | – | – | – | – | 45 |
| end-modified PC1 | 90 | – | 90 | – | – |
| PC-PDMS | – | – | – | – | – |
| end-modified PC-PDMS | – | – | – | – | – |
| PDMS content (% by mass) | – | – | – | – | – |
| Component B' (% by mass) | | | | | |
| HIPS | 10 | 10 | 10 | 10 | 10 |
| ABS | – | – | – | – | – |
| Component C' (part by mass) | | | | | |
| PTFE | 0.5 | 0.5 | 0.5 | 0.5 | 0.5 |
| Component D' (part by mass) | | | | | |
| silicone 1 | – | – | 4 | 4 | 4 |
| silicone 2 | – | – | – | – | – |
| silicone 3 (comparative) | – | – | – | – | – |
| Component E' (part by mass) | | | | | |
| talc | – | – | – | – | – |
| glass fiber | – | – | – | – | – |
| Evaluation Results | | | | | |
| MFR (g/10 min) | 12 | 6 | 14 | 8 | 12 |
| Izod impact strength (kJ/m$^2$) | 60 | 60 | 65 | 65 | 20 |
| Flexural modulus (MPa) | 2300 | 2300 | 2300 | 2300 | 2400 |
| Flame retardancy (UL-94) | | | | | |
| thickness: 1.5mm | V-2NG | V-2NG | V-2NG | V-2NG | V-2NG |
| thickness: 2.5mm | V-2NG | V-2NG | V-0 | V-0 | V-0 |
| Grease resistance (%) | 1.2 | 1.2 | 1.2 | 1.2 | 0.6 |

Table 2 (contd.)

| | Com. Ex. 15 | Ex. 13 | Ex. 14 | Ex. 15 | Com. Ex. 16 |
|---|---|---|---|---|---|
| Composition | | | | | |
| Component A' (% by mass) | | | | | |
| PC-3 | – | – | – | – | 90 |
| PC-2 | – | – | – | – | – |
| end-modified PC1 | 90 | 80 | 65 | 90 | – |
| PC-PDMS | – | – | 25 | – | – |
| end-modified PC-PDMS | – | – | – | – | – |
| PDMS content (% by mass) | – | – | 1 | – | – |
| Component B' (% by mass) | | | | | |
| HIPS | 10 | – | 10 | 10 | 10 |
| ABS | – | 20 | – | – | – |
| Component C' (part by mass) | | | | | |
| PTFE | 0.5 | 0.3 | 0.5 | 0.5 | 0.5 |
| Component D' (part by mass) | | | | | |
| silicone 1 | – | 4 | – | 4 | 4 |
| silicone 2 | – | – | 2 | – | – |
| silicone 3 (comparative) | 4 | – | – | – | – |
| Component E' (part by mass) | | | | | |
| talc | – | – | – | 10 | 10 |
| glass fiber | – | – | – | – | – |
| Evaluation Results | | | | | |
| MFR (g/10 min) | 7 | 16 | 10 | 11 | 6 |
| Izod impact strength (kJ/m$^2$) | 55 | 65 | 75 | 40 | 40 |
| Flexural modulus (MPa) | 2300 | 2400 | 2300 | 3500 | 3400 |
| Flame retardancy (UL-94） | | | | | |
| thickness: 1.5mm | V-2NG | V-2NG | V-2NG | V-0 | V-0 |
| thickness: 2.5mm | V-2NG | V-1 | V-0 | V-0 5VB | V-0 5VB |
| Grease resistance (%) | 1.2 | 1.5 | 1.2 | 1.5 | 1.0 |

Table 2 (contd.)

| | Com. Ex. 17 | Ex. 16 | Ex. 17 | Ex. 18 |
|---|---|---|---|---|
| Composition | | | | |
| Component A' (% by mass) | | | | |
| PC-3 | – | – | – | – |
| PC-2 | – | – | – | – |
| end-modified PC1 | 90 | 10 | 30 | 50 |
| PC-PDMS | – | 80 | 50 | – |
| end-modified PC-PDMS | – | – | – | 40 |
| PDMS content (% by mass) | – | 3.2 | 2 | – |
| Component B' (% by mass) | | | | |
| HIPS | 10 | 10 | 20 | 10 |
| ABS | – | – | – | – |
| Component C' (part by mass) | | | | |
| PTFE | 0.5 | 0.5 | 0.3 | 0.5 |

| | | | | |
|---|---|---|---|---|
| Component D' (part by mass) | | | | |
| silicone 1 | – | – | 2 | – |
| silicone 2 | – | – | – | – |
| silicone 3 (comparative) | 4 | – | – | – |
| Component E' (part by mass) | | | | |
| talc | 10 | 10 | – | 10 |
| glass fiber | – | – | 20 | – |
| Evaluation Results | | | | |
| MFR (g/10 min) | 10 | 6 | 14 | 10 |
| Izod impact strength (kJ/m$^2$) | 40 | 55 | 10 | 55 |
| Flexural modulus (MPa) | 3400 | 3400 | 5200 | 3400 |
| Flame retardancy (UL·94) | | | | |
| thickness: 1.5mm | V·2NG | V·0 | V·0 | V·0 |
| thickness: 2.5mm | V·2NG | V·0 5VB | V·0 5VB | V·0 5VB |
| Grease resistance (%) | 1.2 | 1.3 | 1.5 | 1.3 |

From Table 1, it would appear that the shaped articles produced from the polycarbonate resin compositions of the present invention was improved in the moldability (melt fluidity) with the impact strength maintained high. Also, the shaped articles of the invention are excellent in the grease resistance. In addition, the flame retardancy is further improved by the incorporation of the functionalized silicone compound. Also, even when the inorganic filler was added to enhance the stiffness (flexural modulus), the high impact strength and moldability can be maintained at high level. Accordingly, the polycarbonate resin composition of the present invention is improved in the moldability and flame retardancy, thereby enabling the production of thin-wall shaped articles.

The polycarbonate resin composition of the present invention is excellent in all the impact resistance, melt fluidity and flame retardancy without using a halogen- or phosphorus-containing flame retardant and with less contents of additives. Further, the shaped articles can be reused because of the excellent recyclability of the composition. These beneficial properties and the good moldability/extrudability enable the production of thin-wall or large-size shaped articles, thereby avoiding environmental problems and contributing to saving of resources. Therefore, the composition of the present invention is expected to find more extensive applications including electric and electronic devices such as OA devices, information devices and domestic electric appliances as well as automobile parts.

**Claims**

1. A polycarbonate resin composition comprising:

   (A) 100 parts by mass of an end-modified polycarbonate resin terminated with a $(C_{10}$-$C_{35}$ alkyl)phenoxy group or a polycarbonate resin mixture comprising the end-modified polycarbonate resin and another polycarbonate resin;
   (B) 0.1 to 10 parts by mass of a functionalized silicone compound; and
   (C) 0.2 to 10 parts by mass of a core-shell type rubber-like graft elastomer.

2. The polycarbonate resin composition according to claim 1, wherein 20 mol% or more of the total molecular ends of the end-modified polycarbonate resin are terminated with the $(C_{10}$-$C_{35}$ alkyl)phenoxy group.

3. The polycarbonate resin composition according to claim 1, wherein the polycarbonate mixture contains the end-modified polycarbonate resin in an amount of 20% by mass or more.

4. The polycarbonate resin composition according to any one of claims 1 to 3, wherein the polycarbonate mixture contains a polycarbonate-polyorganosiloxane copolymer in an amount of 0.1 to 10% by mass.

5. The polycarbonate resin composition according to claim 4, wherein the polyorganosiloxane is polydimethylsiloxane, polydiethylsiloxane or polymethylphenylsiloxane.

**6.** The polycarbonate resin composition according to any one of claims 1 to 5, wherein the functionalized silicone compound is a polymer or a copolymer having a basic structure represented by the following formula:

$$R^1{}_a R^2{}_b SiO_{(4-a-b)/2}$$

wherein $R^1$ is alkoxy, aryloxy, polyoxyalkylene, hydrogen, hydroxyl, carboxyl, cyanol, amino, mercapto or epoxy; $R^2$ is $C_1$-$C_{12}$ hydrocarbon group; and a and b are numbers satisfying the following expressions:

$$0 < a \le 3,$$

$$0 \le b < 3,$$

and

$$0 < a + b \le 3.$$

**7.** The polycarbonate resin composition according to any one of claims 1 to 6, wherein the core-shell type rubber-like graft elastomer has a two-layer structure comprising a soft rubber-like core and a hard resinous shell which are formed by polymerizing at least one vinyl monomer in the presence of a rubber-like polymer.

**8.** The polycarbonate resin composition according to any one of claims 1 to 7, further comprising (D) 0.02 to 5 parts by mass of a polyfluoroolefin resin based on 100 parts by mass of the end-modified polycarbonate resin or the polycarbonate mixture.

**9.** The polycarbonate resin composition according to any one of claims 1 to 8, which is made into a shaped article.

**10.** The polycarbonate resin composition according to any one of claims 1 to 8, which is made into a housing or part for electric and electronic devices.

**11.** A polycarbonate resin composition comprising:
100 parts by mass of a resin mixture comprising (A') 1 to 99% by mass of an end-modified polycarbonate resin terminated with a $(C_{10}$-$C_{35}$ alkyl)phenoxy group or a polycarbonate mixture comprising the end-modified polycarbonate resin and another polycarbonate resin and (B') 99 to 1% by mass of a styrene resin; and
(C') 0.01 to 5 parts by mass of a polyfluoroolefin resin

**12.** The polycarbonate resin composition according to claim 11, wherein 20 mol% or more of the total molecular ends of the end-modified polycarbonate resin are terminated with the $(C_{10}$-$C_{35}$ alkyl)phenoxy group.

**13.** The polycarbonate resin composition according to claim 11 or 12, wherein the polycarbonate mixture contains the end-modified polycarbonate resin in an amount of 20% by mass or more.

**14.** The polycarbonate resin composition according to any one of claims 11 to 13, wherein the polycarbonate mixture contains a polycarbonate-polyorganosiloxane copolymer in an amount of 0.1 to 10% by mass.

**15.** The polycarbonate resin composition according to claim 14, wherein the polyorganosiloxane is polydimethylsiloxane, polydiethylsiloxane or polymethylphenylsiloxane.

**16.** The polycarbonate resin composition according to any one of claims 11 to 15, wherein the styrene resin is a polymer produced by polymerizing a monomer or a monomer mixture comprising 20 to 100% by mass of an aromatic monovinyl monomer, 0 to 60% by mass of a vinyl cyanide monomer, and 0 to 50% by mass of another vinyl monomer copolymerizable with the aromatic monovinyl monomer and/or the vinyl cyanide monomer.

**17.** The polycarbonate resin composition according to any one of claims 11 to 15, wherein the styrene resin is a rubber-modified styrene resin.

18. The polycarbonate resin composition according to claim 17, wherein the resin mixture comprises 70 to 98% by mass of the component A' and 30 to 2% by mass of the component B'.

19. The polycarbonate resin composition according to any one of claims 11 to 18, further comprising (D') 0.1 to 10 parts by mass of a functionalized silicone compound based on 100 parts by mass of the resin mixture.

20. The polycarbonate resin composition according to claim 19, wherein the functionalized silicone compound is a polymer or a copolymer having a basic structure represented by the following formula:

$$R^1{}_a R^2{}_b SiO_{(4-a-b)/2}$$

wherein $R^1$ is alkoxy, aryloxy, polyoxyalkylene, hydrogen, hydroxyl, carboxyl, cyanol, amino, mercapto or epoxy; $R^2$ is $C_1$-$C_{12}$ hydrocarbon group; and a and b are numbers satisfying the following expressions:

$$0 < a \leq 3,$$

$$0 \leq b < 3,$$

and

$$0 < a + b \leq 3.$$

21. The polycarbonate resin composition according to any one of claims 11 to 20, further comprising (E') 1 to 100 parts by mass of an inorganic filler based on 100 parts by mass of the resin mixture.

22. The polycarbonate resin composition according to claim 21, wherein the inorganic filler is at least one inorganic substance selected from the group consisting of talc, mica, kaolin, diatomaceous earth, calcium carbonate, calcium sulfate, barium sulfate, glass fiber, carbon fiber and potassium titanate fiber.

23. The polycarbonate resin composition according to any one of claims 11 to 22, which is made into a shaped article.

24. The polycarbonate resin composition according to any one of claims 11 to 22, which is made into a housing or part for electric and electronic devices.

FIG. 1

Test Piece

**European Patent Office**

## EUROPEAN SEARCH REPORT

Application Number

EP 01 11 4745

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| P,X | DATABASE WPI<br>Section Ch, Week 200043<br>Derwent Publications Ltd., London, GB;<br>Class A23, AN 2000-490838<br>XP002177139<br>-& WO 00 39217 A (IDEMITSU PETROCHEM CO LTD), 6 July 2000 (2000-07-06)<br>* abstract * | 1-24 | C08L69/00<br>C08K3/00<br>C08K7/02 |
| A | EP 0 829 521 A (NIPPON ELECTRIC CO)<br>18 March 1998 (1998-03-18)<br>* page 1, line 1 - line 9; table 5 * | 1-24 | |
| A | US 6 071 992 A (MOTOSHIGE RYOICHI  ET AL)<br>6 June 2000 (2000-06-06)<br>* claim 1; tables 2-4 * | 1-24 | |
| A | DE 199 53 297 A (IDEMITSU PETROCHEMICAL CO) 15 June 2000 (2000-06-15)<br>* page 4, line 25 - page 5, line 5; table 1 * | 1-24 | TECHNICAL FIELDS SEARCHED (Int.Cl.7)<br><br>C08L<br>C08K |

The present search report has been drawn up for all claims

| Place of search | Date of completion of the search | Examiner |
|---|---|---|
| MUNICH | 10 September 2001 | Lohner, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 01 11 4745

This annex lists the patent family members relating to the patent documents cited in the above-mentioned European search report.
The members are as contained in the European Patent Office EDP file on
The European Patent Office is in no way liable for these particulars which are merely given for the purpose of information.

10-09-2001

| Patent document cited in search report | | Publication date | Patent family member(s) | Publication date |
|---|---|---|---|---|
| WO 0039217 | A | 06-07-2000 | JP 2000191897 A<br>JP 2000191898 A<br>JP 2001055500 A | 11-07-2000<br>11-07-2000<br>27-02-2001 |
| EP 0829521 | A | 18-03-1998 | JP 10139964 A | 26-05-1998 |
| US 6071992 | A | 06-06-2000 | EP 1022312 A<br>JP 11035816 A | 26-07-2000<br>09-02-1999 |
| DE 19953297 | A | 15-06-2000 | JP 2000143965 A<br>US 6197857 B | 26-05-2000<br>06-03-2001 |

EPO FORM P0459

For more details about this annex : see Official Journal of the European Patent Office, No. 12/82